# EUROPEAN PATENT APPLICATION

(11) **EP 3 719 299 A1**
(43) Date of publication of application: **07.10.2020**
(21) Application number: 19166556.1
(22) Date of filing: 01.04.2019
(51) Int. Cl.: F03D 7/02

(54) **WIND TURBINE AND METHOD FOR OPERATING A WIND TURBINE**

(71) Applicant: Siemens Gamesa Renewable Energy A/S, 7330 Brande (DK)
(72) Inventor: Esbensen, Thomas, 7400 Herning (DK); Rubak, Rune, 8600 Silkeborg (DK)
(74) Representative: Aspacher, Karl-Georg

(57) **Abstract**

Wind turbine (1) comprising a tower (2), a hub (3) rotatable about its longitudinal axis (5) and mounted on the tower (2), at least two blades (4) mounted on the hub (3) and at least two adjusting devices (7), each associated with at least one blade (4) and adjusting an aerodynamic property of the associated at least one blade (4), wherein the wind turbine (1) further comprises a control device (12) configured to individually control the operation for each adjusting device (7) to compensate or to damp a fore-aft oscillation of the tower (2) and/or to at least partly compensate a rotor torque caused by the weight of the hub (3) and/or the blades (4) and/or a nacelle (6).

## Description

The present invention relates to a wind turbine comprising a tower, a hub rotatable about its longitudinal axis and mounted on the tower, at least two blades mounted on the hub and at least two adjusting devices, each associated with at least one blade and adjusting an aerodynamic property of the associated at least one blade. The invention further concerns a method for operating such a wind turbine.

It is known from the state of the art that collectively pitching the blades of a wind turbine allows an adjustment of the aerodynamic properties of the blades and consequently the wind turbine. E.g. from Muljadi, E.; Butterfield C.P.: "Pitch-Controlled Variable-Speed Wind Turbine Generation," presented at the 1999 IEEE Industry Applications Society Annual Meeting, Phoenix, Arizona, Oct. 3-7, 1999, it is known that the power coefficient of a wind turbine changes with a changing pitch angle. This effect can be used to optimize the operation of a wind turbine. For example, at low to medium wind speeds, the pitch angles are adjusted to cause the wind turbine to operate at an optimized power coefficient. At high wind speeds, the maximum power coefficient of a wind turbine might be exceeded, hence the pitch angles of all blades are adjusted collectively to decrease aerodynamic power transferred to a generator of the wind turbine.

A known problem concerning wind turbines are fore-aft oscillations. These oscillations are vibrations or swingings of the tower at the eigenfrequency of the tower. Typical frequencies of fore-aft oscillations are below 1 Hertz, for example 0.3 Hertz. The fore-aft oscillations lead, as the name implies, the tower to move forwards and backwards, which could possibly lead to a damage of the wind turbine, in particular a damage of the concrete structure of the tower, on short but also on large time scales. Thus, there is the need to keep these fore-aft oscillations as low as possible. Changing the pitch angle of the blades collectively can be used to damp fore-aft oscillations of the wind turbine. Different pitch angles lead to different aerodynamic forces acting on all blades and thus on the hub, wherein, as is known from the state of the art, these differences of the aerodynamic forces can be used to damp the tower movements caused by the fore-aft oscillations. During time intervals where the tower is moving forward, the pitch angle of the blades can be adjusted to lead to an increased aerodynamic force acting on the blades or the hub, respectively, to counteract the current motion of the tower caused by the fore-aft oscillation.

It is an object of the present invention to provide an enhanced concept of a wind turbine, especially regarding a prolonged operating life of the structural members of the wind turbine.

To achieve this object, a wind turbine as initially described is characterized in that the wind turbine further comprises a control device configured to individually control the operation for each adjusting device to compensate or to damp a fore-aft oscillation of the tower and/or to at least partly compensate a rotor torque caused by the weight of the hub and/or the blades and/or a nacelle.

The individual control of the operation for the adjusting devices allows a differently adjusted aerodynamic property for at least two different blades, causing a torque acting on the hub. The hub is connected to an electric power generator typically located at the inside of the nacelle of the wind turbine, wherein the nacelle is typically positioned on top of the tower of the wind turbine.

The asymmetric force distribution around the hub caused by the different aerodynamic forces caused by the differently adjusted aerodynamic properties acting on the blades lead to the respective torque acting on the hub. For example, a thrust caused by aerodynamic forces acting on the blades which are currently located above the hub can be larger than a thrust caused by aerodynamic forces acting on the blades which are currently located below the hub. This will lead to a torque causing a lifting of the front portion or front tip of the hub, which is also called the nose of the hub, and/or to counteracting a force acting to lower the nose. In analogy to this, a thrust caused by aerodynamic forces acting on the blades which are currently located above the hub can be smaller than a thrust caused by aerodynamic forces acting on the blades which are currently located below the hub. This will lead to a torque causing a lowering of the nose of the hub and/or to counteracting a force acting to lifting the nose of the hub.

To compensate or damp the fore-aft oscillation of the tower and/or to at least partly compensate the rotor torque by the torque caused by the individual aerodynamic properties, for example pitch angles, optimally, the torque vector should point into a horizontal direction, at least essentially perpendicular to the rotational axis of the hub.

On the one hand, the torque can be constant or have a constant portion used as an offset for a tilt of the nose of the hub. The tilt can be caused by the weight of the hub and/or the blades and/or the nacelle. Since a system comprising the blades, the hub and the nacelle is typically not mounted on the tower at its centre of gravity, the nose of the hub is tilted downwards due to the weight of these components, wherein this torque is called the rotor torque. The rotor torque can be at least partly compensated by the torque caused by the individual control of the operation of the adjusting devices.

On the other hand, the individual control of the adjusting devices can be performed to create a changing torque or a changing portion of the torque to compensate fore-aft oscillations. When the tower is currently moving forwards, the thrust acting on the blades located at a higher position than the hub can be larger than the thrust acting on the blades located at a lower position than the hub, leading to a torque acting towards lifting the nose of the hub upwards, such that the current motion of the tower is damped. When the tower is currently moving backwards, the thrust acting on the blades located at a higher position than the hub can be smaller than the thrust acting on the blades located at a lower position than the hub leading to a torque acting towards lowering the nose of the hub, such that the current motion of the tower and thus the fore-aft oscillation is also damped.

In preferred embodiments, the torque may comprise a constant portion compensating the rotor torque and a variable portion compensating or damping the fore-aft oscillation of the tower. Thus, the invention advantageously offers a simple possibility to avoid or at least damp fore-aft oscillations and/or an undesired tilt of the hub by the torque acting on the hub caused by adjusting the aerodynamic properties of the blades of the wind turbine individually.

The term "fore-aft oscillation", as used throughout the complete description, means all kind of, especially repetitive, forward-and-back motions wind turbines or, more precisely, towers of wind turbines may perform. This includes sinusoidal motions as well as other types of motion like inharmonic oscillations or the like.

To generate a specific torque acting on the hub, it is necessary to consider the current position of the blades, i.e. the current azimuth angle of each blade. For this purpose, the wind turbine according to the present invention can comprise a blade position sensor to measure a blade position information concerning the current rotational position of the blades regarding the rotation around the longitudinal axis of the hub, wherein the control device is configured to control the operation of the adjusting devices depending on the blade position information. The blade position information is used to individually control the operation for each adjusting device systematically, allowing to specifically adjust the torque acting on the hub.

To create a constant torque (or torque portion) acting on the rotating hub (for at least partly compensating the rotor torque), the aerodynamic property of each blade has to change continuously over time depending on the azimuth angle of each blade. Such a continuous adjustment of the aerodynamic properties of each blade will, in most cases, also be required when the torque acting on the hub is supposed to be changing (for damping or compensating the fore-aft oscillation). Only if the period of the fore-aft oscillation equals the period of the rotation of the hub, there may be cases in which the aerodynamic property of the blade can be set to different constant values/settings to create a torque which is in counter phase to the fore-aft oscillation, leading to a compensation or damping of the fore-aft oscillation. To achieve a damping or compensating effect of the fore-aft oscillation without the need to continuously change the aerodynamic property of the blades, the rotational period of the hub can be adjusted by, e.g. adjusting the electric power output of the generator.

Preferably, the number of adjusting devices is equal to the number of blades of the wind turbine, wherein each adjusting device is associated with a certain blade. The aerodynamic property of each blade can be adjusted individually, i.e. independently from all other blades. This results in an enhanced accuracy concerning the adjustment of the torque allowing for an optimized compensation or damping of the fore-aft oscillations and/or the rotor torque.

In an embodiment of the invention, the wind turbine comprises three blades. Each of the three blades can be associated with one of three adjusting devices of the wind turbine.

The adjusting devices can be configured to pitch the associated at least one blade or at least a section of the associated at least one blade. Pitching a blade or the section of the blade means to tilt or to rotate or to pivot the blade or the section of the blade around the longitudinal blade axis. By changing the pitch angle, the angle at which the wind driving the wind turbine strikes the blade also changes, leading to a change of the aerodynamic properties of the blade.

Possible pitch angles of the blades can be restricted according to an allowed pitch angle range limited by a first pitch angle and a second pitch angle. The first pitch angle can be an angle where a minimum inclination, i.e. a minimum skew, with respect to the rotational plane of the blades is adjusted. The second angle can be an angle with a maximum inclination with respect to the rotational plane of the blades. The first pitch angle and the second pitch angle can correspond to a maximized and minimized transmission of power from the wind to the wind turbine. Exemplarily, the range of the first pitch angle can be 10° or the like. The pitch angle can be adjusted continuously and/or stepwise. The adjusting device can be an electromechanical actor, for example an electric motor.

In an embodiment of the present invention, the adjusting devices can be configured to position and/or to extend and/or to pivot at least one component movably mounted on the associated at least one blade. The at least one component can be a trim stall device or, in other words, stall strips provided on the front edge of the blade to modify the aerodynamic characteristics via flow separation. Additionally or alternatively, the component might also be a movable flap which is typically pivotally mounted on the blade via a hinged joint cooperating with the adjusting device, which can be an electromechanical actor like an electric motor. Furthermore, active blade add-ons can be provided for this purpose.

Preferably, the wind turbine further comprises an oscillation sensor to determine an oscillation information concerning the current fore-aft oscillation, wherein the control device is configured to control the operation of adjusting devices depending on at least one oscillation parameter based on the oscillation information. Hence, the control of the operation of the adjusting devices can be adjusted specifically regarding a current fore-aft oscillation, which is characterized by the oscillation parameter. The oscillation parameter can be an amplitude, a frequency and/or a phase angle of the fore-aft oscillation.

Assuming that the amplitude, the frequency and the phase angle of the present fore-aft oscillation are known or can be estimated, the control device is preferably configured to control the adjusting devices such that the torque acting on the hub changes periodically. An optimized damping of the fore-aft oscillation can be provided if the amplitude of the fore-aft oscillation equals the amplitude of the oscillation of the torque, if the phase angle of the torque leads to a counter-phase of the oscillation of the torque and the fore-aft oscillation of the tower, and if the frequency of the fore-aft oscillation equals the frequency of the oscillation of the torque.

To realize a periodic change of the torque, the control device can be configured to control the operation of the adjusting device such that the aerodynamic properties of the blades also change periodically.

As already described above, the blades being positioned above the hub at a certain instant can be adjusted to have a larger aerodynamic resistance compared to the blades located below the hub at this instant. This leads, in sum, to a larger aerodynamic force acting on the blades located above the hub compared to the aerodynamic force acting on the blades located below the hub. Further effects like different rotational angles of the blades, resulting in different lever arms regarding the torque around the horizontal axis, have to be taken into account when controlling the operation of the adjusting devices. Since the number of blades can be odd, it has furthermore to be considered that the number of blades above the hub and the number of blades below the hub can differ from each other. All these aspects typically have to be considered when individually controlling the adjusting devices to create a periodical change of the torque.

The oscillation sensor can be an acceleration sensor, preferably located within the nacelle of the wind turbine, and/or the oscillation sensor can be connected to the control device. Here, it has to be taken into account that the current velocity of the fore-aft oscillation is lagging the acceleration by a phase angle of 90°.

The oscillation parameter can be determined by measuring a frequency spectrum of all present oscillations of the wind turbine or the tower. Since the frequency of the fore-aft oscillation is typically known (and often around 0.3 Hertz), the oscillation parameters regarding the current fore-aft tower oscillation can be extracted from the frequency spectrum provided by the oscillation sensor or the control device.

It is also possible to determine the oscillation parameter by additionally using an oscillation model providing at least the expected frequency of the fore-aft oscillation of the tower depending on, e.g. the current rotation frequency of the hub and/or the current wind speed and/or current weather conditions etc. Preferably, in addition to using the oscillation model, measured values for the acceleration of the tower, for the rotation of the hub (measured by, e.g. a gyrometer) and/or for a blade load can be used to determine the oscillation parameter. Results of the oscillation model can be verified by data measured by the oscillation sensor and vice versa.

Furthermore, the present invention relates to a method for operating a wind turbine, wherein the wind turbine comprises a tower, a hub rotatable about its longitudinal axis and mounted on the tower, at least two blades mounted on the hub and at least two adjusting devices, each associated with at least one blade and adjusting an aerodynamic property of the associated at least one blade, wherein the operation for each adjusting device is controlled individually, wherein the different aerodynamic properties of the blades result in a torque acting on the hub, wherein the torque compensates or dampens a fore-aft oscillation of the tower and/or at least partly compensates a rotor torque caused by the weight of the hub and/or the blades and/or a nacelle. The aerodynamic resistance appearing at the blades, e.g. currently located above the hub, is different compared to the aerodynamic resistance appearing at the blades, e.g. currently located below the hub, leading to a torque or, in other words, to a tilt moment acting on the hub.

Preferably, a blade position information concerning a current rotational position of the blades regarding the rotation around the longitudinal axis of the hub is determined, wherein the operation of the adjusting devices is controlled depending on the blade position information.

In a preferred embodiment, an oscillation information concerning the current fore-aft oscillation is determined, wherein the operation of the adjusting devices is controlled depending on at least one oscillation parameter based on the oscillation information. Additionally or alternatively, the adjusting device can be controlled such that the torque acting on the hub changes periodically.

In a preferred embodiment, the operation for each adjusting device is only controlled individually if an endangerment criterion is fulfilled, wherein the endangerment criterion is fulfilled if the probability that the actual condition of the wind turbine will lead to a damage of the wind turbine is larger than a threshold value. Damping the fore-aft oscillation by individually controlling the adjusting devices may only be performed if the actual condition of the wind turbine is potentially harmful, otherwise the individual pitching of the blades can be turned off to avoid an unnecessary wear of the pitch system. In this embodiment a look-up table, which can be stored in the control device, can be used to determine the probability that the actual conditions of the wind turbine will lead to a damage of the wind turbine.

In an embodiment, the endangerment criterion is fulfilled if the or an oscillation parameter lies within a pre-defined oscillation parameter range and/or if the current wind speed lies within a pre-defined wind speed range and/or if an expected tower-to-blade-tip distance is smaller than a distance threshold value. The current wind speed can be determined by using a wind sensor (anemometer), which is connected to the control device. The pre-defined wind speed range may be determined based on structural features of the wind turbine, especially of the tower, wherein it is typically known, at which wind speeds fore-aft oscillations typically occur. A typical wind speed range where relevant fore-aft oscillations often occur is between 7 and 12 m/s.

The tower-to-blade-tip distance is the horizontal distance between the blade tip and the tower if the respective blade is currently located at the six o'clock position. Since the pitching of the blade could possibly lead to a reduction of the tower-to-blade-tip distance, the individual pitching should be avoided if the tower-to-blade-tip distance is smaller than the distance threshold value, which can be a value of one meter or the like, to avoid the blade colliding with the tower, which can possibly lead to to severe damage to the wind turbine. For this purpose, also look-up tables can be used.

All features of the wind turbine according to the present invention and the explained advantages also apply to the method according to the present invention and vice versa.

Further advantages and details of the invention can be taken from the following description of preferred embodiments in conjunction with the drawings. These show:
- Fig. 1: An embodiment of a wind turbine according to the present invention,
- Fig. 2: the wind turbine of fig. 1 in a state where the tower of the wind turbine moves forward,
- Fig. 3: the wind turbine of fig. 1 in a state where the tower of the wind turbine moves backwards,
- Fig. 4: a time-amplitude diagram showing typical torque moments acting on the hub, caused by fore-aft oscillations and the individual pitching, and
- Fig. 5: a flowchart of a method according to the present invention.

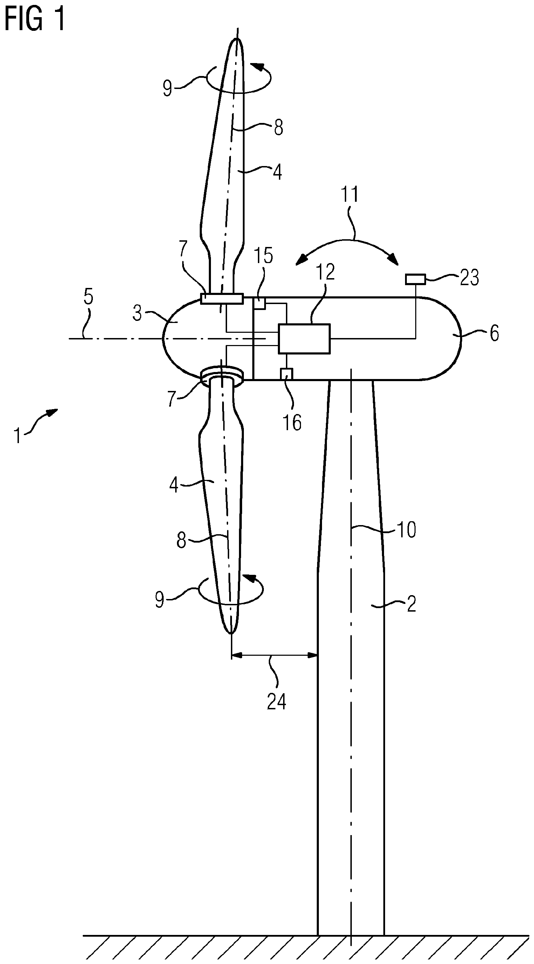

Fig. 1 shows a wind turbine 1 comprising a tower 2, a hub 3 and three blades 4, wherein in all figures only two of the three blades 4 are visible due to the perspective used. The blades 4 are mounted on the hub 3, wherein the hub 3 and, thus, also the blades 4 are rotatable around the longitudinal hub axis 5. The hub 3 is rotatably mounted on a drive shaft (not shown) to drive an electric generator (also not shown), which is located in the inside of a nacelle 6 of the wind turbine 1.

Each blade 4 of the wind turbine 1 is connected to an adjusting device 7, which is exemplarily an electric motor. The adjusting devices 7 adjust an aerodynamic property of the associated blade 4. In this embodiment, the adjusting devices 7 are pitching devices to pitch or tilt the respective blade 4 around its longitudinal axis 8. Thus, the adjusting device 7 adjusts a pitching angle of the respective blade 4. In fig. 1, the pitching of the blade 4 is indicated by the arrow 9.

Additionally or alternatively, it also possible to adjust the aerodynamic property of the associated blade 4 by positioning and/or extending and/or pivoting at least one component movably mounted on the associated at least one blade 4. Such a component can for example be a trim stall device or a movable flap or the like.

Since the nacelle 6 of the wind turbine 1 rotates around the longitudinal tower axis 10 leading the nose of the hub 3 directing into (or alternatively averted to) the wind direction, changing the pitch angle of the blades 4 leads to a change of the skew, or in other words, the inclination of the blades 4 with respect to the wind direction. As a consequence, the aerodynamic force of the wind acting on the blades 4 depends on the pitch angle. Here, the pitch angle can be adjusted within a pitch angle range restricted by a first pitch angle, where the aerodynamic force of the wind acting on the blade 4 is at its maximum and the second pitch angle, where the aerodynamic force acting on the blade is at its minimum. As another consequence, the power transmitted from the wind to the generator via the blades 4 and the hub 3 is changing with a changing pitch angle.

A known problem concerning wind turbines are fore-aft oscillations. These oscillations are caused by, e.g. aerodynamic wind forces acting on the wind turbine 1 such that the tower 2, in particular the top of the tower 2,oscillates forwards or backwards along the longitudinal axis 8 of the hub 3. The fore-aft oscillation is indicated in fig. 1 by the arrow 11.

A known procedure to damp fore-aft oscillations of wind turbines is to collectively change the pitch angles of the blades 4. While the tower 2 is moving forward, the pitch angle of the blades 4 can be adjusted leading to a stronger aerodynamic force acting on the blades 4 and while the tower 2 is moving backwards, the pitch angles of the blades 4 can be adjusted to lower the aerodynamic force acting on the blades 4 leading to a compensation or damping of the fore-aft oscillation. In contrast to this, the wind turbine 1 comprises a control device 12 configured to individually control the operation for each adjusting device 7 to compensate or to damp the fore-aft oscillation.

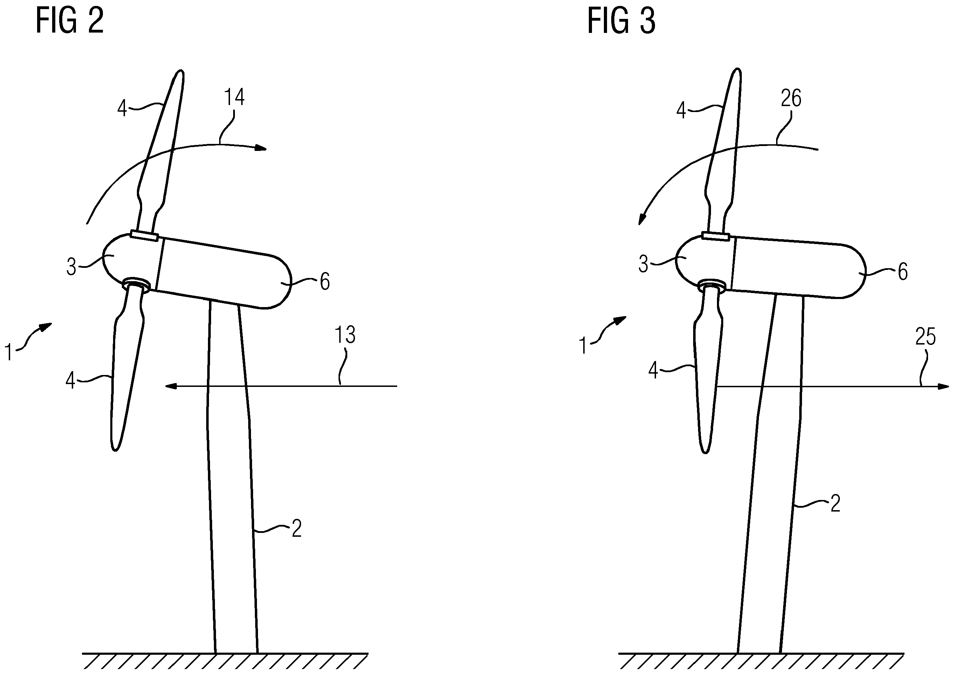

The principle of the damping of the fore-aft oscillation is shown in fig. 2 and fig. 3. Fig. 2 shows the situation, where the wind turbine 1 currently moves forward, i.e. into the direction of the nose of the hub 3. This motion is indicated by an arrow 13 in fig. 2. Assuming that the nose of the hub 3 is directed against the wind direction, the aerodynamic forces acting on the blades 4 which are located below the hub 3 in this situation lead to a torque causing a lowering of the nose of the hub 3. The aerodynamic forces acting on the blades 4, which are located above the hub 3 in this situation lead to a torque causing a lifting of the nose of the hub 3. In this situation, by individually controlling the adjusting devices 7, the aerodynamic forces acting on the blades 4 are adjusted such that the torque lifting the nose is larger than the torque lowering the nose. In sum, a torque leading to a lifting of the nose of the hub 3 or to a rotation of the nacelle 6 into clockwise direction results, wherein the torque is indicated by an arrow 14 in fig. 2. Since at this moment the tower 2 moves into the direction indicated by the arrow 13, the torque works against the fore-aft oscillation leading to a damping of this oscillation.

In fig. 3, a situation is shown where the wind turbine 1 or the tower 2 of the wind turbine 1, respectively, moves backwards caused by the fore-aft oscillation. This motion is indicated by the arrow 25. In this situation, the torque resulting from individually controlling the adjusting devices 7 such that individually adjusted pitch angles of the blades 4 result acts in the direction of lowering the nose of the hub 3, or, in other words, acts to rotate the nacelle 6 into counter clockwise direction. Hence, the resulting torque indicated by an arrow 26, counteracts the motion indicated by the arrow 25 caused by the fore-aft oscillation. The fore-aft oscillation is therefore also damped during the situation shown in fig. 3, where the tower 2 is moving backwards.

Fig. 1 shows that the system containing the hub 3, the blades 4 and the nacelle 6 is not mounted on the tower 2 at its centre of mass. The weight of these components leads to a rotor torque acting on the nacelle 6 in counter clockwise rotation direction in fig. 1. The individual control of the adjusting devices 7 furthermore at least partly compensates the rotor torque. Hence, the individual control of the operation of the adjusting devices 7 allows for at least partly compensating the rotor torque caused by the weight of the respective components as well as for damping or compensating the fore-aft oscillation of the tower 2.

To realize specific values for the torque induced by the individual control of the operation of the adjusting devices 7, a blade position information measured by a blade position sensor 15 of the wind turbine 1 is used. The blade position information describes the current rotational position of the blades 4 regarding the rotation around the longitudinal axis 5 of the hub 3. Using this information, the control device 12 computes the torque acting on the hub 3 while taking into account the current rotational position of each blade 4.

To realize a constant torque for compensating the rotor torque and/or a variable torque for compensating the fore-aft oscillation, in the typical case the pitch angle of each blade 4 has to be changed continuously over time, since the rotational position of each blade 4 also changes over time. However, if the period of the fore-aft oscillation and the period of the rotation of the hub 3 are equal to each other, it may be possible to choose constant pitch angles permanently applied for each blade 4, such that a torque is created which is in counterphase to the fore-aft oscillation. In this rare case, once the pitch angle has been adjusted, it remains at its constant value leading to a reduction of the wear of the pitch system, i.e. the adjusting devices 7 and bearings of the blades 4 allowing the pitching. Since the rotational period of the hub 3 can be changed by changing the output power of the generator of the wind turbine, adjusting the output power offers the opportunity to synchronize the fore-aft oscillation and the rotation of the hub 3 such that phases match as desired.

The control device 12 is furthermore connected to an oscillation sensor 16 of the wind turbine 1, wherein the oscillation sensor 16 is provided to determine an oscillation information concerning the current fore-aft oscillation. The oscillation sensor 16 is an acceleration sensor. The oscillation sensor 16 is in particular provided to determine the frequency, the amplitude and the phase of the fore-aft oscillation. The control device 12 uses this information for the individual control of the operation of the adjusting devices 7.

The oscillation sensor 16 detects present oscillations concerning the wind turbine 1 not only for one specific frequency, but also for a frequency band. Since the frequency of the fore-aft oscillation of the tower 2 is typically known (and typically around 0.3 Hertz) the respective amplitude can be extracted from the data collected by the oscillation sensor 16.

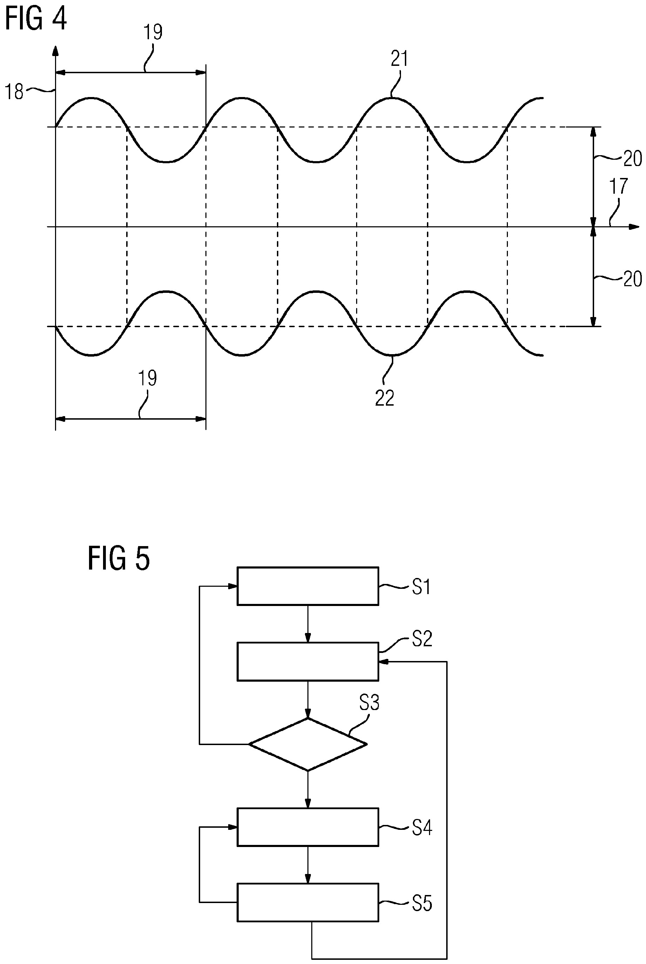

Fig. 4 shows a diagram to exemplify the damping of the fore-aft oscillation of the tower 2 and the compensation of the rotor torque. The horizontal axis 17 shows the time and the vertical axis 18 shows a torque or force acting on the hub 3 or the nacelle 6, respectively, which is caused by fore-aft oscillations, the rotor torque and the torque caused by the individual control of the blades 4. In the upper part of the diagram in fig. 4, a sinusoidal curve 21, which is shifted from zero into a positive vertical direction, is displayed. The curve 21 corresponds to the fore-aft oscillation, wherein the period of the fore-aft oscillation is indicated by an arrow 19. The constant rotor torque, which leads to the vertical shift of the sinusoidal curve, is indicated by an arrow 20. In the lower part of the diagram of fig. 4, another sinusoidal curve 22 is shown corresponding to the torque caused by the individual control of the adjusting devices 7. To optimally damp the fore-aft oscillation, the period of the fore-aft oscillation is equal to the frequency of the sinusoidal torque. Furthermore, these two oscillations are phase shifted by 180° and have equal amplitudes. As a third aspect, the constant part of the torque, which leads to a shift of the sinusoidal curve into negative vertical direction, equals the constant rotor torque. In sum, the two sinusoidal curves 21, 22 cancel out each other and thus completely damp the fore-aft oscillation as well as completely compensate the rotor torque. Although the situation in fig. 4 indicates constant values for the frequency and the amplitude of the fore-aft oscillation, these values can change with time, wherein the control device 12 is provided to adjust the respective torque parameters by controlling the adjusting devices 7 over time.

The individual control of the operation for each adjusting device 7 may only be executed if an endangerment criterion is fulfilled. The endangerment criterion can be fulfilled if the probability that the actual conditions of the wind turbine 1 will lead to a damage of the wind turbine 1 is larger than a threshold value. The probability can be determined by the control device 12, e.g. by using a lookup table.

The endangerment criterion is fulfilled if the current wind speed lies within a pre-defined wind speed range, exemplarily within 7 and 12 m/s. The control device 12 is connected to a wind sensor 23 located on top of the nacelle 6. If the current wind speed is below this range, the fore-aft oscillation is quite weak or not present at all, and therefore a damage of the wind turbine 1 caused by the fore-aft oscillation is not expected. An unnecessary wear of the pitch system can be avoided.

The endangerment criterion is furthermore fulfilled if the amplitude of the fore-aft oscillation, determined using data collected by the oscillation sensor 16, lies within a pre-defined amplitude range.

Additionally, the endangerment criterion is fulfilled if an expected tower-to-blade-tip distance is smaller than a distance threshold value. The tower-to-blade-tip distance, which is indicated by an arrow 24 in fig. 1, is the horizontal distance between the tip of the blade 4 and the tower 2, when the respective blade 4 is positioned in the six o'clock position (although this is not the case for the lower blade 4 in fig. 1, the principle is illustrated). The expected tower-to-blade-tip distance can be determined using current oscillation parameters and/or parameters of the torque created by the individual control of the adjusting devices 7. If the tower-to-blade-tip distance becomes too small, e.g. is zero or negative, a collision of the blade 4 with the tower 2 will occur. To avoid this, an individual control of the adjusting devices 7 which would cause a torque leading to a decrease of the tower-to-blade-tip distance to a value which is smaller than the distance threshold value (which can be one meter or the like) will not be executed.

Fig. 5 shows a flowchart of an exemplary method according to the operation of the wind turbine 1 as shown in figs. 1 to 4. In step S1, the method is started. In step S2, the control device 12 determines the current wind speed using data provided by the wind sensor 23 (anemometer). In step S3, the control device 12 checks if an endangerment criterion is fulfilled. This is the case, if the current wind speed is between, exemplarily, 7 and 12 m/s. If the endangerment criterion is not fulfilled, the method will start again. If the endangerment criterion is fulfilled, i.e. if the current wind speed lies within the wind speed range, the method will continue with step S4. In step S4, the control device 12 determines the oscillation parameter based on data provided by the oscillation sensor 16, wherein the oscillation information concerns the current fore-aft oscillation. Alternatively or additionally, the oscillation information by the oscillation sensor 16 can also be taken into account for the endangerment criterion in step S3. In step S4, the oscillation parameter is determined based data provided by the oscillation sensor 16. In step S5, the control device 12 individually controls the operation of each adjusting device 7 to damp the fore-aft oscillation and to compensate the rotor torque caused by the weight of the hub 3 and the blades 4 and the nacelle 6. Step S4 can be executed and repeated continuously while step S5 is performed. This causes an individual control of the adjusting devices 7 based on current conditions. Next, the method will continue with step S2.

Although the present invention has been described in detail with reference to the preferred embodiment, the present invention is not limited by the disclosed examples from which the skilled person is able to derive other variations without departing from the scope of the invention.

## Claims

1. Wind turbine (1) comprising a tower (2), a hub (3) rotatable about its longitudinal axis (5) and mounted on the tower (2), at least two blades (4) mounted on the hub (3) and at least two adjusting devices (7), each associated with at least one blade (4) and adjusting an aerodynamic property of the associated at least one blade (4), **characterized in that** the wind turbine (1) further comprises a control device (12) configured to individually control the operation for each adjusting device (7) to compensate or to damp a fore-aft oscillation of the tower (2) and/or to at least partly compensate a rotor torque caused by the weight of the hub (3) and/or the blades (4) and/or a nacelle (6).

2. Wind turbine according to claim 1, **characterized in that** the number of adjusting devices (7) equals the number of blades (4) of the wind turbine (1), wherein each adjusting device (7) is associated with a certain blade (4).

3. Wind turbine according to claim 1 or 2, **characterized in that** the adjusting devices (7) are configured to pitch the associated at least one blade (4) or at least a section of the associated at least one blade (4).

4. Wind turbine according to one of the preceding claims, **characterized in that** the adjusting devices (7) are configured to position and/or to extend and/or to pivot at least one component movably mounted on the associated at least one blade (4).

5. Wind turbine according to one of the preceding claims, **characterized in that** the wind turbine (1) further comprises an oscillation sensor (16) to determine an oscillation information concerning the current fore-aft oscillation, wherein the control device (12) is configured to control the operation of the adjusting devices (7) depending on at least one oscillation parameter based on the oscillation information.

6. Method for operating a wind turbine, wherein the wind turbine (1) comprises a tower (2), a hub (3) rotatable about its longitudinal axis (5) and mounted on the tower (2), at least two blades (4) mounted on the hub (3) and at least two adjusting devices (7), each associated with at least one blade (4) and adjusting an aerodynamic property of the associated at least one blade (4), **characterized in that** the operation for each adjusting device (7) is controlled individually, wherein the different aerodynamic properties of the blades (4) result in a torque acting on the hub (3), wherein the torque compensates or damps a fore-aft oscillation of the tower (2) and/or at least partly compensates a rotor torque caused by the weight of the hub (3) and/or the blades (4) and/or a nacelle (6).

7. Method according to claim 6, **characterized in that** an oscillation information concerning the current fore-aft oscillation is determined, wherein the operation of the adjusting devices (7) is controlled depending on at least one oscillation parameter based on the oscillation information.

8. Method according to claim 6 or 7, **characterized in that** the adjusting devices (7) are controlled such that the torque acting on the hub (3) changes periodically.

9. Method according to one of the claims 6 to 8, **characterized in that** the operation for each adjusting device (7) is only controlled individually if an endangerment criterion is fulfilled, wherein the endangerment criterion is fulfilled if the probability that the actual condition of the wind turbine (1) will lead to a damage of the wind turbine (1) is larger than a threshold value.

10. Method according to claim 9, **characterized in that** the endangerment criterion is fulfilled if the or an oscillation parameter lies within a pre-defined oscillation parameter range and/or if the current wind speed lies within a pre-defined wind speed range and/or if an expected tower-to-blade-tip distance is smaller than a distance threshold value.
